# EUROPÄISCHE PATENTSCHRIFT

(11) **EP 0 895 847 B1**
(45) Veröffentlichungstag und Bekanntmachung des Hinweises auf die Patenterteilung: **06.02.2002**
(21) Anmeldenummer: 98114875.2
(22) Anmeldetag: 07.08.1998
(51) Int. Cl.: B29C 44/10, B29C 44/58, B29C 45/26

(54) **Verfahren zum Herstellen von Formteilen aus Biopolymeren**
Method for the manufacturing of articles from biopolymers
Procédé pour la fabrication d'objets en biopolymères

(30) Priorität: 08.08.1997 DE 19734300
(43) Veröffentlichungstag der Anmeldung: 10.02.1999
(73) Patentinhaber: Priehs, Friedrich, 28832 Achim (DE)
(72) Erfinder: Priehs, Friedrich, 28832 Achim (DE)
(74) Vertreter: Gramm, Werner, Prof. Dipl.-Ing.

(56) Entgegenhaltungen:
- EP-A- 0 634 261
- WO-A-96/05254
- FR-A- 2 345 283
- FR-A- 2 433 407
- FR-A- 2 602 996
- PATENT ABSTRACTS OF JAPAN vol. 010, no. 242 (M-509), 21. August 1986 & JP 61 072511 A (N B C KOGYO KK), 14. April 1986

## Beschreibung

Die Erfindung betrifft ein Verfahren zum Herstellen von Formteilen aus Biopolymeren.

Zu den Biopolymeren im eigentlichen Sinne gehören Nucleinsäuren, Polypeptide und Proteine, Polysaccharide und Polyisoprene. Erfindungsgemäß kommen in erster Linie nachwachsende Rohstoffe in Frage, wie z.B. native und modifizierte Stärken und stärkehaltige Produkte, wie z.B. Weizen, Mais, Kleie etc.

Bekannt ist die Verarbeitung von Biopolymeren z.B. zu Verpackungsships. Hierfür werden Extruder verwendet, wie sie auch in der Thermoplast-, Duroplast- und Elastormerverarbeitung benutzt werden. Das Biopolymer wird in Mehl-, Teig- oder Granulatform zugeführt, plastifiziert und in Strangform kontinuierlich über Lochdüsen ausgetragen. Rotierende Schlagmesser zerschneiden die einzelnen Stränge dann auf das gewünschte Maß der Verpackungsships.

Bekannt ist auch die Verarbeitung von Biopolymeren zu Formteilen mit relativ gleichmäßigen Wandstärken, wie z.B. Einwegtellern und Verpackungen für die Nahrungsmittelindustrie. Hier wird in der Regel auf das sog. Backverfahren zurückgegriffen, bei dem das Biopolymer als Granulat, Teig- oder Mehlmischung in die Form gegeben wird. Dort geschieht dann die Aufschäumung und Aushärtung des Formteiles durch Erhitzen.

EP 0 634 261 (Suzuki Soygo Co. Ltd.), das als nächster Stand der Technik für Anspruch 1 angesehen wird, offenbart ein Verfahren zum Herstellen von Formteilen aus Biopolymeren, mit folgenden Verfahrensschritten:
a) die Ausgangsstoffe werden durch thermische und mechanische Energieeinleitung in einem Einspritzaggregat verdichtet und plastifiziert;
b) der Innenraum der Form wird mit einem Gas unter einem Druck befüllt, der etwa dem Druck in der aufplastifizierten Masse im Einspritzaggregat entspricht;
c) eine möglichst gleichmäßige Befüllung des Forminnenraumes mit der noch nicht wesentlich expandierten Masse wird gewährleistet;
d) während oder kurz nach dem Einspritzvorgang wird der Forminnenraum schlagartig entlüftet, um die abschließende Expansion des eingespritzten Polymers zu ermöglichen und dann den Schäumprozess zu beenden.

In der DE-A 34 20 195 ist ein Verfahren zum Herstellen von Papierschaum aus Altpapier und/oder Pappe beschrieben. Dieses Ausgangsmaterial wird zuerst zu einer Fasermasse aufgearbeitet und dann mit Stärke vermischt. Die Mischung wird dann durch thermische und mechanische Energieeinleitung in einem Extruder verdichtet und plastifiziert, um dann beim Extruderaustritt durch Temperatur- und Druckabfall zu expandieren bzw. aufzuschäumen.

Der Erfindung liegt die Aufgabe zugrunde, ein verbessertes Herstellverfahren sowie eine hierfür geeignete Form zur Herstellung von Formteilen aus Biopolymeren zu entwickeln.

Diese Aufgabe wird hinsichtlich des Verfahrens erfindungsgemäß durch folgende Verfahrensschritte gelöst:
a) die Ausgangsstoffe werden durch thermische und mechanische Energieeinleitung in einem Einspritzaggregat verdichtet und plastifiziert;
b) der Forminnenraum der zuvor abgedichteten Form wird mit einem Gas unter einem Druck befüllt, der etwa dem Druck in der aufplastifizierten Masse im Einspritzaggregat entspricht;
c) die plastifizierte Masse wird möglichst schnell in den Forminnenraum eingespritzt mit einer Einspritzgeschwindigkeit, die eine möglichst gleichmäßige Befüllung des Forminnenraumes mit der noch nicht wesentlich expandierten Masse gewährleistet;
d) während oder kurz nach dem Einspritzvorgang wird der Forminnenraum schlagartig entlüftet, um die abschließende Expansion des eingespritzten Polymers zu ermöglichen und dann den Schäumprozess zu beenden.

Dabei ist es zweckmäßig, wenn die Biopolymere mit Pflanzen-, Papier- oder Holzfasern, Cellulose und/oder Spinnereiprodukten oder sonstigen faserhaltigen Produkten angereichert werden.

Die Druckbeaufschlagung des Forminnenraumes kann z.B. mit Druckluft oder durch Befüllung mit Stickstoff erfolgen. Da der Forminnendruck etwa dem Druck innerhalb des Einspritzaggregates entspricht, kann sich das plastische Biopolymer nach seinem Einspritzen in den Forminnenraum gleichmäßig verteilen, ohne hierbei bereits voll aufzuschäumen. Dabei ist eine formteilspezifische Einspritzgeschwindigkeit und während des Einspritzvorganges gegebenenfalls eine variable Einspritzgeschwindigkeit vorzusehen. Ziel ist eine möglichst schnelle und gleichmäßige Befüllung des Forminnenraumes. Zum Abbau der formenspezifisch unterschiedlich hohen Druckbeaufschlagung im Forminnenraum soll eine gleichmäßige und gleichzeitige Entlüftung an jedem Punkt des Forminnenraumes erfolgen. Dabei ist es zweckmäßig, den Zeitpunkt der Druckbeaufschlagung und insbesondere den der Druckentlastung des Forminnenraumes in Bezug auf den Einspritzvorgang über eine vorzugsweise elektrische Steuerung exakt festzulegen und auszuführen. Dieser Zeitpunkt kann für jede Form unterschiedlich sein.

Mit dem erfindungsgemäßen Verfahren lassen sich bei einem entsprechenden Anlagenkonzept, z.B. einer Drehtischanlage, in Zyklen von nur 5 - 15 Sekunden Formteile in großer Stückzahl wirtschaftlich herstellen. Dabei gewährleistet die schlagartige Entlüftung des Forminnenraumes dessen gleichmäßige Befüllung durch die endgültige Expansion des eingespritzten Biopolymers. Dies wiederum führt zu einem gleichmäßigen, feinporigen und homogenen Schaum und einer guten Oberflächenbeschaffenheit des Formteiles.

Weitere Merkmale der Erfindung sind Gegenstand der Unteransprüche und werden in Verbindung mit weiteren Vorteilen der Erfindung anhand eines Ausführungsbeispieles näher erläutert.

In der Zeichnung ist eine als Beispiel dienende Ausführungsform zur Durchführung des erfindungsgemäßen Verfahrens dargestellt. Es zeigen:
- **Figur 1**: einen lotrechten Längsschnitt durch eine Form zur Herstellung eines Formteils im Spritzgießverfahren;
- **Figur 2**: das in Figur 1 dargestellte Formunterteil in Draufsicht und
- **Figur 3**: die Form gemäß Figur 1 mit anschlossenem Druckerzeuger und einer angeschlossenen Schnellentlüftung.

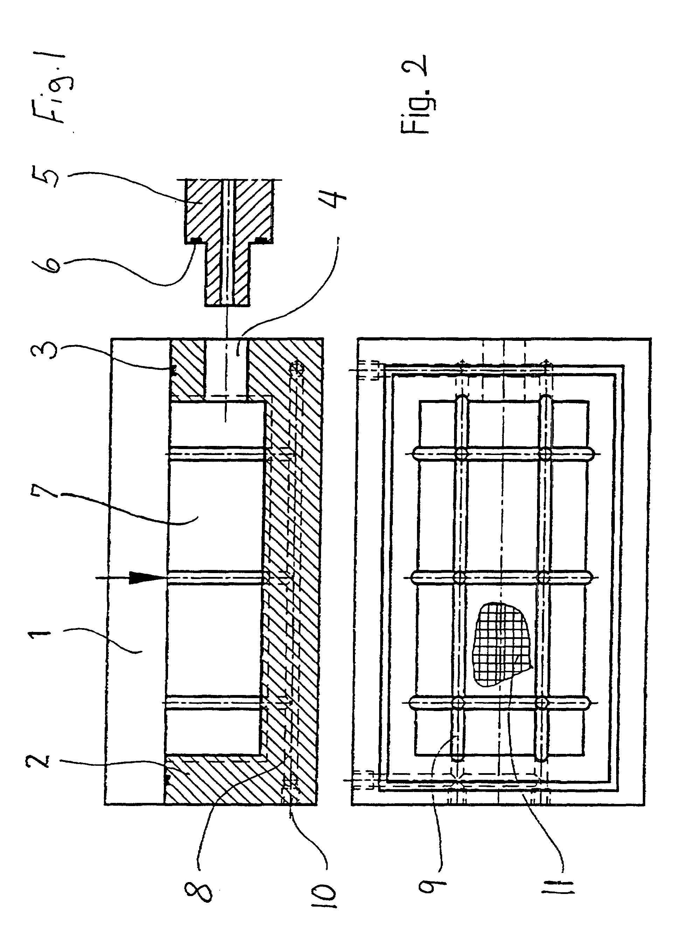

Die in Figur 1 dargestellte Form besteht aus einem Formoberteil 1 und einem Formunterteil 2, in deren Trennebene eine Dichtung 3 vorgesehen ist, die unter Einwirkung des Schließdrucks einer nicht näher dargestellten Schließeinheit die Formin der Trennebene gasdicht abschließt. in der rechten Stirnwand des Formunterteils 2 ist ein Einspritzkanal 4 vorgesehen, dem die Einspritzdüse 5 eines nicht näher dargestellten Einspritzaggregates zugeordnet ist. Wird die Einspritzdüse 5 in den Einspritzkanal 4 eingefahren, erfolgt über eine stirnseitige Dichtung 6 eine gasdichte Abdichtung des Forminnenraumes 7 nach außen.

Das Formunterteil 2 weist Be- und Entlüftungsbohrungen 8 auf, an die Belüftungsnuten 9 angeschlossen sind, die in den den Forminnenraum 7 begrenzenden Wandungen vorgesehen sind. Das Formunterteil 2 weist Anschlussverschraubungen 10 für die Be- und Entlüftungsleitungen 8 auf. Der Forminnenraum 7 kann überdies mit einer Gittergewebeeinlage 11 ausgekleidet sein, die mit den Belüftungsnuten 9 hinterlegt ist.

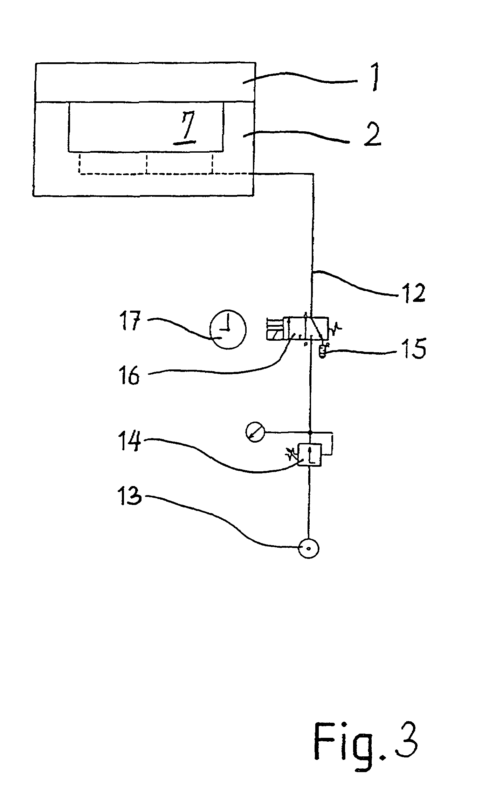

Figur 3 lässt erkennen, dass an die Anschlussverschraubungen 10 Be- und Entlüftungsrohre 12 angeschlossen sind, die ausreichend groß dimensioniert sind, um eine Schnellentlüftung des Forminnenraumes 7 vornehmen zu können.

Zur Belüftung des Forminnenraumes 7 mit z.B. Druckluft oder Stickstoff ist an das Belüftungsrohr 12 ein Druckerzeuger 13 angeschlossen, dem ein Druckregulierventil 14 mit Manometer zugeordnet ist. in das Entlüftungsrohr 12 ist ferner eine Schnellentlüftung 15 geschaltet, die pneumatische Magnetventile 16 aufweist, die von einer Zeitsteuerung 17 beaufschlagt werden.

Zur Durchführung des Einspritzvorganges wird zuerst die vorzugsweise beheizte Form geschlossen, indem eine nicht dargestellte Schließeinheit das Formoberteil 1 mit aktivem Druck auf das Formunterteil 2 presst und hierdurch die Form in ihrer Trennebene gasdicht abdichtet. Anschließend fährt das nicht dargestellte Einspritzaggregat vor und schiebt seine Einspritzdüse 5 in den Einspritzkanal 4, bis die stirnseitige Dichtung 6 einen gasdichten Abschluss in diesem Bereich bewirkt. Dann wird der Forminnenraum 7 mit Hile des Druckerzeugers 13 über das Belüftungsrohr 12, die Anschlussverschraubungen 10, die Belüftungsbohrungen 8 und die Belüftungsnuten 9 mit einem Gasdruck, z.B. Stickstoff, beaufschlagt. Es beginnt dann der Einspritzvorgang, wobei die Einspritzgeschwindigkeit so einzustellen ist, dass der Forminnenraum möglichst schnell und vor allem möglichst gleichmäßig gefüllt wird. Das plastifizierte Biopolymer gelangt dadurch ohne wesentliche Expansion in den Forminnenraum 7. Nach dem Beginn des Einspritzvorganges erfolgt über eine entsprechende Zeitsteuerung 17 eine schlagartige Entlüftung des Forminnenraumes 7 über die Schnellentlüftung 15 bzw. durch Öffnung ihrer pneumatischen Magnetventile 16. Durch diese schlagartig einsetzende Entlüftung wird die endgültige Expansion des eingespritzten Biopolymers ermöglicht und damit der Schäumprozess beendet, wodurch sich eine gleichmäßige Formfüllung, ein gleichmäßiger, feinporiger homogener Schaum sowie eine gute Oberflächenbeschaffenheit des Formteiles ergeben.

Durch Anpassungen der Rezeptur und/oder Veränderungen einzelner Parameter kann die Dichte des Schaumes variiert werden.

## Patentansprüche

1. Verfahren zum Herstellen von Formteilen aus Biopolymeren, mit folgenden Verfahrensschritten:
a) die Ausgangsstoffe werden durch thermische und mechanische Energieeinleitung in einem Einspritzaggregat verdichtet und plastifiziert;
b) der Forminnenraum der zuvor abgedichteten Form wird mit einem Gas unter einem Druck befüllt, der etwa dem Druck in der aufplastifizierten Masse im Einspritzaggregat entspricht;
c) die plastifizierte Masse wird möglichst schnell in den Forminnenraum eingespritzt mit einer Einspritzgeschwindigkeit, die eine möglichst gleichmäßige Befüllung des Forminnenraumes mit der noch nicht wesentlich expandierten Masse gewährleistet;
d) während oder kurz nach dem Einspritzvorgang wird der Forminnenraum schlagartig entlüftet, um die abschließende Expansion des eingespritzten Polymers zu ermöglichen und dann den Schäumprozess zu beenden.

2. Verfahren nach Anspruch 1, **dadurch gekennzeichnet, dass** der Zeitpunkt der Druckbeaufschlagung sowie der der Druckentlastung des Forminnenraumes bezogen auf den Einspritzvorgang gesteuert werden.

3. Verfahren nach Anspruch 1 oder 2, **dadurch gekennzeichnet, dass** die Form beheizt wird.

4. Verfahren nach Anspruch 1, 2 oder 3, **dadurch gekennzeichnet, dass** die Biopolymere mit Pflanzen-, Papier- oder Holzfasern, Cellulose und/oder Spinnereiprodukten oder sonstigen faserhaltigen Produkten angereichert werden.

## Claims

1. A method of manufacturing moulded articles from biopolymers, having the following method steps:
a) the starting materials are compressed and plasticised in an injection unit by thermal and mechanical energy input;
b) the mould cavity of the previously sealed mould is filled with a gas under a pressure which corresponds approximately to the pressure in the plasticised composition in the injection unit;
c) the plasticised composition is injected as quickly as possible into the mould cavity at an injection speed which ensures that the mould cavity is filled as uniformly as possible with the as yet not substantially expanded composition;
d) during or shortly after the injection process, the mould cavity is abruptly vented, in order to allow final expansion of the injected polymer and then to complete the foaming process.

2. A method according to claim 1, **characterised in that** the time at which pressure is applied to the mould cavity and the time at which the pressure is relieved are controlled in relation to the injection process.

3. A method according to claim 1 or claim 2, **characterised in that** the mould is heated.

4. A method according to claim 1, 2 or 3, **characterised in that** plant, paper or wood fibres, cellulose and/or spinning products or other fibrous products are added to the biopolymers.

## Revendications

1. Procédé pour la fabrication d'objets en bio-polymères, comprenant les étapes de procédé suivantes:
a) on comprime et on plastifie les matières premières dans un ensemble d'injection par apport d'énergie mécanique et thermique;
b) on remplit l'espace intérieur du moule, dont l'étanchéité a été préalablement effectuée, d'un gaz sous une pression qui correspond sensiblement à la pression de la masse qui a été plastifiée dans l'ensemble d'injection;
c) on injecte aussi vite que possible dans l'espace intérieur du moule la masse qui a été plastifiée, avec une vitesse d'injection qui assure un remplissage aussi régulier que possible de l'espace intérieur du moule par la masse qui est encore essentiellement non expansée;
d) pendant ou juste après le processus d'injection, on met brusquement l'espace intérieur du moule à l'atmosphère pour permettre l'expansion occlusive du polymère injecté puis terminer le processus de formation de mousse.

2. Procédé selon la revendication 1, **caractérisé en ce qu'**on commande l'instant de la pressurisation ainsi que de la dépressurisation de l'espace intérieur du moule en relation avec le processus d'injection.

3. Procédé selon la revendication 1 ou 2, **caractérisé en ce qu'**on chauffe le moule.

4. Procédé selon la revendication 1, 2 ou 3, **caractérisé en ce qu'**on enrichit les bio-polymères avec des fibres de plantes, de papier ou de bois, de la cellulose et/ou des produits de filature ou d'autres produits contenant des fibres.
